Europäisches Patentamt

European Patent Office

Office européen des brevets

(11) Veröffentlichungsnummer: **0 463 413 A2**

# EUROPÄISCHE PATENTANMELDUNG

(21) Anmeldenummer: **91109148.6**

(22) Anmeldetag: **05.06.91**

(51) Int. Cl.5: **G11B 7/24**, G11B 7/00

(30) Priorität: **16.06.90 DE 4019301**

(43) Veröffentlichungstag der Anmeldung:
**02.01.92 Patentblatt 92/01**

(84) Benannte Vertragsstaaten:
**DE FR GB NL**

(71) Anmelder: **BASF Aktiengesellschaft**
**Carl-Bosch-Strasse 38**
**W-6700 Ludwigshafen(DE)**

(72) Erfinder: **Iselborn, Stefan, Dr.**
**Friedrichstrasse 164**
**W-6700 Ludwigshafen(DE)**
Erfinder: **Fischer, Gerd, Dr.**
**Faberstrasse 20**
**W-6700 Ludwigshafen(DE)**
Erfinder: **Hibst, Hartmut, Dr.**
**Branichstrasse 23**
**W-6905 Schriesheim(DE)**

(54) **Reversibler optischer Aufzeichnungsträger vom Phasenwechsel-Typ.**

(57) Optischer Aufzeichnungsträger mit mindestens einem Substrat, mindestens einer Speicherschicht vom Phasenwechsel-Typ mit mindestens drei reversibel ineinander umschaltbaren Zuständen unterschiedlichen optischen Verhaltens, wobei der Unterschied im Reflexionsvermögen zwischen mindestens einem Paar von Zuständen größer als zwischen dem amorphen und dem kristallinen Zustand ist.

EP 0 463 413 A2

Die Erfindung betrifft einen optischen Aufzeichnungsträger mit mindestens einem Substrat und mindestens einer Speicherschicht vom Phasenwechsel-Typ, bei dem durch Einstrahlung von Laserlicht Informationen wiederholt aufgezeichnet, gelöscht und gelesen werden können, wobei der Aufzeichnungsträger mindestens drei reversibel ineinander umschaltbare Zustände unterschiedlichen optischen Verhaltens aufweist, die unterschiedliche Volumenanteile von kristalliner und amorpher Phase in der Speicherschicht enthalten, und der Unterschied im Reflexionsvermögen zwischen mindestens einem Paar von Zuständen größer als zwischen dem amorphen und dem kristallinen Zustand ist.

Seit mehreren Jahren werden sogenannte Phasenwechselmedien für die reversible optische Informationsaufzeichnung eingesetzt. Beispiele hierzu sind Tellur, Selen, Chalkogenid-Legierungen auf Tellur- oder Selenbasis, oder III-V-Halbleitermaterialien, die unter Einwirkung intensiver Strahlung, z.B. Laserlicht, reversibel vom amorphen in den kristallinen Zustand geschaltet werden können. Bei der Aufzeichnung wird die Information durch entsprechende Bestrahlung des Speichermaterials in amorphe und kristalline Bereiche des Mediums umgesetzt. Amorphe und kristalline Bereiche haben hierbei ein unterschiedliches optisches Verhalten, das durch physikalische Größen wie das optische Reflexionsvermögen, die optische Transmission bzw. Absorption, den Brechungsindex oder die Dielektrizitätskonstante charakterisiert werden kann. Unterschiedliches Verhalten zeigt sich auch hinsichtlich der elektrischen Eigenschaften wie z.B. dem spezifischen Widerstand.

Im allgemeinen wird zum Lesen der aufgezeichneten Informationen das unterschiedliche Reflexionsvermögen amorpher und kristalliner Bereiche für Laserstrahlung verwendet. Gelegentlich wird die unterschiedliche optische Transmission zum Lesen ausgenutzt.

Für das Lesen der Informationen wird Laserlicht geringerer Intensität als für das Schreiben verwendet, so daß das aufgezeichnete Muster von amorphen und kristallinen Bereichen beim Lesen nicht verändert wird.

Beispiele für optische Aufzeichnungsmedien, bei denen die beiden Zustände, zwischen denen geschaltet wird, in der amorphen bzw. in der kristallinen Phase vorliegen, sind in EP-A 212 336; US 3,530,441; US 3,971,874 und US 4,278,734 zu finden.

Häufig wird als Kennzeichen des Phasenwechselverfahrens nicht ausdrücklich die Änderung der strukturellen Phase des Speichermaterials benutzt, sondern die unterschiedliche Auswirkung der strukturellen Eigenschaften auf die optischen Eigenschaften. Beispielsweise wurde in EP-A 195 532 statt des allgemein üblichen Begriffes "Phasenwechselverfahren" der Begriff "Optisches-Konstanten-Wechsel-Verfahren" verwendet. Die optischen Konstanten sind der Brechungsindex und der Absorptionskoeffizient und bereits die Änderung nur einer der beiden Größen führt im allgemeinen zu der gewünschten Änderung des Reflexionsvermögens. Entsprechend wird in EP-A 265 204 direkt als Kennzeichen der beim Phasenwechsel beteiligten Phasen deren unterschiedliches Reflexionsvermögen angeführt.

Diese Art der Definition des Phasenwechsels ist nicht eindeutig. Beispielsweise wird in EP-A 184 452 ein reversibles optisches Aufzeichnungsverfahren und -medium beschrieben, das ebenfalls durch zwei Zustände unterschiedlichen Reflexionsvermögens ausgezeichnet ist. Die Ursache dafür liegt jedoch in der Eigenschaft des beschriebenen Speichermaterials, zwei stabile kristalline Zustände unterschiedlicher Textur zu bilden.

In US 4,719,615 wird ebenfalls ein reversibles optisches Speichermedium mit zwei Zuständen unterschiedlichen Reflexionsvermögens beschrieben. Ursache dafür ist eine blasenartige Verformung der Oberfläche, die durch Laserlicht hervorgerufen und rückgängig gemacht werden kann.

Das nach der Herstellung in der Regel in amorpher Form vorliegende Speichermedium wird entsprechend EP-A 180 103 zunächst einem Energiepuls ausgesetzt, um es in den kristallinen Zustand zu versetzen. Dazu wird häufig eine Bestrahlung des Speichermediums mit Laserlicht durchgeführt. Der Prozeß wird als Formierung oder Initialisierung bezeichnet.

In der Regel werden beim Schreibprozeß kristalline Bereiche der Speicherschicht durch Laserstrahlung hoher Intensität über ihren Schmelzpunkt erwärmt, der bei den üblicherweise verwendeten Speichermaterialien mehrere hundert Grad Celsius betragen kann. Sobald der Laserstrahl die bestrahlte Stelle verlassen hat, erfolgt eine rasche Abkühlung. Als Resultat dieses Abschreckens wird der kristalline Bereich in einen amorphen Bereich umgewandelt. Beim Löschprozeß werden die amorphen Bereiche durch Laserstrahlung geringer Intensität bis zur Kristallisationstemperatur erwärmt, die niedriger als die Schmelztemperatur ist, und somit in kristalline Bereiche zurückverwandelt. Gelegentlich wird auch umgekehrt durch Kristallisieren geschrieben und durch Amorphisieren gelöscht.

Damit eine schnelle Datenübertragung möglich ist, sollte die zum Schreiben als auch die zum Löschen notwendige Zeitdauer möglichst kurz sein. Es wurde daher intensiv nach Materialien gesucht, die mit sehr kurzen Laserimpulsen löschbar sind. Beispiele für solche Materialien sind in EP-A 212 336 und EP-A 217 293 zu finden.

Es zeigte sich nun jedoch, daß gerade diese Materialien nur sehr schlecht beschreibbar sind, da während des Schreibvorganges auch der sehr schnell verlaufende Löschvorgang einsetzt. Deshalb gelingt es nicht, die Speichermaterialien an den gewünschten Stellen vollständig in den amorphen Zustand zu schalten. Es bleiben immer kristalline Restanteile zurück. Dieses Verhalten kann als "Eigenlöschung" bezeichnet werden. Durch die Eigenlöschung wird in den bekannten Aufzeichnungsträgern der Unterschied des Reflexionsvermögens der beiden Zustände reduziert und die zum fehlerfreien Lesen notwendige Signalhöhe bzw. ein ausreichend hohes Signal/Rausch-Verhältnis wird teilweise nicht erreicht.

Aufgabe der Erfindung war es daher, optische Aufzeichnungsträger auf der Grundlage von Phasenwechselmedien bereitzustellen, bei denen das Problem der Signalabnahme und des schlechten Signal/Rausch-Verhältnisses infolge Eigenlöschung gelöst ist. Die entsprechende Speicherschicht muß trotz der schnellen Löschbarkeit eine hohe Stabilität der die Information tragenden Bereiche unterschiedlichen Kristallisationsgrades gewährleisten und der Aufzeichnungsträger muß genügend korrosionsstabil sein.

Demgemäß wurden die eingangs definierten Aufzeichnungsträger gefunden.

Bevorzugte Aufzeichnungsträger dieser Art sind den Unteransprüchen zu entnehmen.

Es wurde nun überraschenderweise gefunden, daß es optische Aufzeichungsträger gibt, bei denen der Reflexionsunterschied zwischen teilkristallinen Bereichen mit unterschiedlichen kristallinen Volumenanteilen sogar größer ist als der Reflexionsunterschied zwischen amorphen und kristallinen Bereichen. Dies bedeutet, daß beim Einsatz der schnell kristallisierenden Materialien die teilweise Eigenlöschung von Vorteil ist, weil beim Lesen das größtmögliche Signal nur dann erhalten wird, wenn beim Beschreiben der amorphe Endzustand nicht erreicht wird.

Als Phasenwechsel-Speichermedien der erfindungsgemäßen Aufzeichnungsträger eignen sich die bekannten Chalkogenid-Legierungen und III-V-Halbleitermaterialien (siehe Sato et al.; "Optical Data Storage Meeting", Gordon R. Knight, Clark H. Kurtz, Herausgeber, Proc. SPIE 1078 (1989), Seiten 11 bis 13). Bevorzugte Speichermedien der genannten Art bestehen mindestens zu 90 Gew.-% aus GeTe oder $GeSb_2Te_4$.

Die Speichermedien können bis zu 10 Gew.-% von einer oder mehreren Komponenten enthalten, die hinsichtlich der Bereiche unterschiedlichen Kristallisationsgrades eine Vergrößerung der Unterschiede in den optischen Eigenschaften bewirken und/oder zu einer Stabilisierung dieser Bereiche beitragen. Diese Komponenten sind bevorzugt so zu wählen, daß ein verbesserter Korrosionsschutz erreicht wird. Alternativ können diese Komponenten nur den Korrosionsschutz verbessern. Beispiele für derartige Komponenten, die bis zu 10 Gew.-% im Phasenwechselmedium enthalten sein können, sind Selen, Schwefel und Chrom.

Die Anwendung der Phasenwechselmaterialien erfolgt bekanntermaßen am besten in der Form dünner Schichten. Dünne Schichten haben eine geringere Wärmekapazität als kompaktes Material und können deshalb mit relativ geringer Lichtintensität beschrieben werden. Die dünnen Schichten werden in der Regel durch physikalische Abscheideverfahren wie Sputtern oder Aufdampfen usw. auf Substrate aufgebracht.

Beispiele für geeignete Substrate sind Glas, Polycarbonat, Polymethylmethacrylat oder Polyvinylchlorid. Die am häufigsten verwendeten Substrate sind transparent, damit die Phasenwechselschichten durch die Substrate hindurch beleuchtet werden können, und tragen Vorkehrungen, mit denen das Auffinden einer vorher vorhandenen Information ermöglicht wird. Typisches Beispiel dafür sind kreis- oder schneckenförmige Spurrillen oder verschiedenartige Sektorinformationen, wie sie beispielsweise in DE 30 32 769 C2 beschrieben sind.

Auf wenigstens einer Seite der Speicherschicht kann eine dielektrische Schicht aufgebracht sein. Diese vorzugsweise transparente Schicht kann als Antireflexionsschicht und/oder als Schutzschicht vor Abrieb und/oder Korrosion wirken. Schichten dieser Art bestehen bevorzugt aus Carbid, Oxid, Nitrid, Sulfid (ZnS) oder deren Mischungen. Besonders bevorzugt sind Nitridschichten aus AlN, $Si_3N_4$ oder deren Mischungen. Es wurde gefunden, daß die erfindungsgemäßen Effekte bei gleicher Schichtdicke der dielektrischen Schicht unabhängig von der Wahl einer der genannten Nitridschichten auftraten.

Bevorzugt ist eine dielektrische Schicht zwischen dem transparenten Substrat und der Speicherschicht angeordnet. In einer besonders bevorzugten Ausführungsform sind auf beiden Seiten der Speicherschicht dielektrische Schichten angebracht.

Vorzugsweise ist zwischen dem aus Speicherschicht und eventuellen dielektrischen Schichten bestehenden Schichtsystem und dem Substrat oder auf der dem Substrat abgekehrten Seite dieses Schichtsystes eine metallisch reflektierende Schicht angebracht. Hierbei kann es sich um eine metallische Reflexionsschicht beispielsweise aus Aluminium handeln. Die Dicke der Aluminiumschicht beträgt mehr als 10 nm, bevorzugt mehr als 20 nm und besonders bevorzugt mehr als 25 nm. Alternativ kann als Reflexionsschicht auch eine dielektrische Einfach- oder Mehrfachschicht verwendet werden. Bevorzugte Reflexionsschichten haben ein Reflexionsvermögen von größer als 50%.

Bei einer besonders bevorzugten Ausführungsform der Erfindung besteht der Aufzeichnungsträger aus einem Schichtsystem, bei dem auf beiden Seiten der Speicherschicht eine transparente dielektrische Schicht angeordnet ist und auf der dem Substrat abgekehrten Seite des Schichtsystems eine metallische Reflexionsschicht aufgebracht ist.

Besonders bevorzugte erfindungsgemäße Aufzeichnungsträger bestehen aus einem Substrat und hierauf in der angegebenen Reihenfolge angeordnet einer ersten dielektrischen Schicht aus AIN und/oder $Si_3N_4$ mit einer Schichtdicke zwischen 50 und 200 nm, einer Speicherschicht aus GeTe oder $GeSb_2Te_4$ mit einer Schichtdicke zwischen 10 und 50 nm, einer zweiten dielektrischen Schicht aus AIN und/oder $Si_3N_4$ mit einer Schichtdicke zwischen 15 und 100 nm und einer Al-Schicht mit einer Schichtdicke größer als 20 nm.

Die erfindungsgemäßen Aufzeichnungsträger können folgendermaßen ermittelt werden:

1) Zunächst werden experimentell mit einem bekannten Verfahren (z.B. der spektralen Ellipsometrie) die optischen Konstanten Brechungsindex n und Absorptionskoeffizient k der amorphen und der kristallinen Form einer Phasenwechselschicht sowie eventuell von weiteren Schichten (dielektrische Schichten, Reflexionsschicht, Substrat) bestimmt.

2) Dann wird die komplexe Dielektrizitätskonstante jeweils für die amorphe und kristalline Form der Speicherschicht berechnet. Die durch Gleichung (1) definierte komplexe Dielektrizitätskonstante e und die optischen Konstanten n und k können unter Verwendung der Gleichungen (2) und (3) eindeutig ineinander umgerechnet werden:

$$e = e_1 + ie_2 \quad (1)$$
$$e_1 = n^2 - k^2 \quad (2)$$
$$e_2 = 2nk \quad (3)$$

3) Mit den auf diese Weise erhaltenen Dielektrizitätskonstanten der amorphen Form ($e_a$) und der kristallinen Form ($e_k$) der Speicherschicht können die Dielektrizitätskonstanten von Speicherschichten mit beliebigem Volumenanteil x der amorphen Phase ($e_x$) nach einem von R.W.Cohen et al., Physical Review, B8, 1973, Seiten 3689ff, beschriebenen Verfahren ermittelt werden. Es gilt Gleichung (4), die für alle Schichten

$$(e_x - 2e_a)/(e_x + 2e_a) = (1-x)(e_k - e_a)/(e_k + 2e_a) \quad (4)$$

mit amorphem Volumenanteil x ($0 \leq x \leq 1$) eindeutig die zugehörige Dielektrizitätskonstante $e_x$ ergibt. Die komplexe Größe $e_x$ ($e_x = e_{1x} + ie_{2x}$) liefert mit den Gleichungen (2) und (3) die optischen Konstanten $n_x$ und $k_x$ für Schichten mit unterschiedlichem amorphen Volumenanteil x.

4) Es ist darauf zu achten, daß die Schichtdicken der beteiligten Schichten geeignet gewählt werden. Für eine beliebige Reihenfolge von Schichten mit bekannten Brechungsindizes $n_1$, $n_2$, $n_3$, ... Absorptionskoeffizienten $k_1$, $k_2$, $k_3$, ..., und Schichtdicken $d_1$, $d_2$, $d_3$, ..., kann das Reflexions- oder Transmissionsvermögen beispielsweise nach einem in O.S. Heavens, "Optical Properties of Thin Solid Films", Butterworths Scientific Publications, London, 1955, S. 69 - 72, beschriebenen Verfahren berechnet werden.

5) In entsprechenden Rechenprogrammen können auf bequeme Weise die Schichtdicken aller beteiligten Schichten sowie der amorphe Volumenanteil in der Speicherschicht variiert und im Hinblick auf maximale Unterschiede im Reflexionsvermögen von beschriebenem und unbeschriebenem Zustand optimiert werden.

Die erfindungsgemäßen Aufzeichnungsträger enthalten mindestens eine Speicherschicht und mindestens ein Substrat. Derartige mehrfache Aufzeichnungsträger können beispielsweise dadurch erhalten werden, daß zwei Aufzeichnungsträger, die aus einem Substrat, einer Speicherschicht und eventuellen dielektrischen Schichten bestehen, geeignet miteinander verbunden werden. Hierzu können die beiden Aufzeichnungsträger beispielsweise so verklebt werden, daß sich die beiden Speicherschichten gegenüberliegen.

Für die Erzeugung der einzelnen Schichten haben sich generell Sputterverfahren bewährt, weil diese eine gute Reproduzierbarkeit der Materialzusammensetzung und der Schichtdicke garantieren. Eine weitere geeignete Abscheidemethode ist das Aufdampfen.

Das erfindungsgemäße Speichermedium, das nach der Herstellung in der Regel in amorpher Form vorliegt, muß zunächst initialisiert werden, wobei sich ein oder mehrere Laserpulse mit mindestens 10mal längerer Pulsdauer als beim Schreiben oder Löschen bewährt haben. Durch die Initialisierung wird das Speichermedium in der Regel in den kristallinen Zustand gebracht. In den Fällen, in denen ein teilkristalliner Zustand die maximale Reflexion aufweist, kann das Speichermedium durch die Initialisierung in den teilkristallinen Zustand, der dem Reflexionsmaximum entspricht, gebracht werden.

Das Schreiben erfolgt mit einem Laserpuls, der das Speichermedium in einen Zustand mit dem kristallinen Volumenanteil schaltet, der unter allen möglichen Zuständen mit unterschiedlichen kristallinen Volumenanteilen den höchsten Reflexionsunterschied zum initialisierten Zustand hat. Das Löschen erfolgt mit einem Laserpuls relativ niedriger Intensität, wobei der kristalline Zustand zurückgebildet wird.

Hieraus ergeben sich mehrere wichtige Vorteile der erfindungsgemäßen Aufzeichnungsträger. Der Schreibvorgang kann schneller erfolgen, da nicht abgewartet werden muß, bis ein vollständig amorpher Zustand erreicht ist. Noch deutlicher ist der Vorteil beim Löschvorgang. Hierbei verläuft der Übergang vom amorphen in den kristallinen Zustand langsamer als der Übergang in umgekehrter Richtung vom kristallinen in den amorphen Zustand, da zunächst Kristallisationskeime gebildet werden müssen. Ein besonderer Vorteil der erfindungsgemäßen Aufzeichnungsträger ist nun, daß die Kristallisation der teilkristallinen Bereiche schneller als aus dem amorphen Zustand heraus abläuft, weil bereits viele Kristallisationskeime im teilkristallinen Bereich vorliegen.

Die Bedeutung dieses Vorteils läßt sich daran ermessen, daß bei Aufzeichnungsträgern mit langsameren Löscheigenschaften der Löschstrahl elliptisch sein muß. Dies hat zur Folge, daß neben dem Schreiblaser ein zweiter Laser allein für den Löschvorgang notwendig ist. Es ist offensichtlich, daß die Anordnung mit einem Laser kostengünstiger und einfacher ist als die Anordnung mit zwei Lasern.

Ein weiterer Vorteil der erfindungsgemäßen Aufzeichnungsträger ergibt sich dadurch, daß die Genauigkeit, mit der der kristalline Volumenanteil festgelegt werden muß, relativ niedrig ist, so daß nur eine geringe Empfindlichkeit des Signals gegenüber kleinen Schwankungen des kristallinen Volumenanteils besteht.

Beispiele

Beispiele 1 bis 4 sind gemäß Stand der Technik, d.h. der maximale Reflexionsunterschied tritt zwischen der amorphen und der kristallinen Phase auf. Beispiele 5 bis 19 sind erfindungsgemäß, d.h. der maximale Reflexionsunterschied tritt zwischen einer teilkristallinen und einer kristallinen Phase auf.

In den Beispielen 1 bis 10 besteht die Speicherschicht aus $GeSb_2Te_4$, in den Beispielen 11 bis 19 aus GeTe.

Die erfindungsgemäßen Aufzeichnungsträger der Beispiele 5 bis 19 wurden entsprechend der oben erläuterten rechnerischen Methode erhalten. Bei den Rechnungen waren die experimentell mittels spektraler Ellipsometrie ermittelten optischen Konstanten beispielsweise für die $GeSb_2Te_4$-Speicherschicht im amorphen Zustand $n_a = 4,4$ und $k_a = 1,7$ und im kristallinen Zustand $n_c = 4,4$ und $k_c = 3,25$. Die optischen Konstanten der AlN-Schichten waren $n = 2,0$ und $k = 0$, die optischen Konstanten der Al-Schichten $n = 1,99$ und $k = 7,0$. Das Substrat hatte die optischen Konstanten $n = 1,5$ und $k = 0$.

Für Aufzeichnungsträger mit einer $GeSb_2Te_4$-Speicherschicht ergab sich unter Verwendung der gefundenen optischen Konstanten des vollständig amorphen und des vollständig kristallinen Zustands, daß alle Speicherschichten mit Volumenanteil x der amorphen Phase die optischen Konstanten $n_x = 4,4$ und $k_x = k_c + (k_a-k_c)x$ besitzen.

In weiteren Rechnungen wurden unter Verwendung der optischen Konstanten aller beteiligten Schichten die jeweiligen Schichtdicken und der Volumenanteil x der amorphen Phase variiert und die Reflexionsvermögen berechnet.

Als Ergebnis von Optimierungsrechnungen wurden die erfindungsgemäßen Aufzeichnungsträger gefunden, bei denen experimentell verifiziert werden konnte, daß der maximale Reflexionsunterschied zwischen einer teilkristallinen und einer kristallinen Phase auftritt.

Analog wurde bei den erfindungsgemäßen Aufzeichnungsträgern der Beispiele 11 bis 19 mit einer GeTe-Speicherschicht verfahren.

Beispiele 1 bis 3

Es wurden drei Aufzeichnungsträger nach Stand der Technik hergestellt, indem eine erste AlN-Schicht, eine $GeSb_2Te_4$-Speicherschicht und eine zweite AlN-Schicht auf ein Glassubstrat gesputtert wurden (Schichtdicken siehe Tabelle 1). Die AlN-Schichten wurden durch reaktives Magnetronsputtern einer Al-Kathode (Kathodenleistung: 0,4 kW) erzeugt, wobei als Sputtergas hierbei eine Mischung von Argon ($2,6x10^{-3}$ mbar) und Stickstoff ($2,4x10^{-3}$ mbar) verwendet wurde. Die $GeSb_2Te_4$-Speicherschicht wurde durch RF-Diodensputtern eines $GeSb_2Te_4$-Targets hergestellt (Kathodenleistung: 0,1 kW; Abscheiderate 20,4 nm/min; Substrat-Target-Abstand 56 mm). Als Sputtergas wurde Argon ($1x10^{-2}$ mbar) verwendet. Der Restgasdruck vor Beginn des Sputterns betrug mindestens $10^{-6}$ mbar.

Die im amorphen Zustand erhaltene $GeSb_2Te_4$-Speicherschicht konnte durch Anwendung von Laserstrahlung unterschiedlicher Pulsleistung und/oder Pulsdauer in jeden Zustand mit beliebig hohem kristallinen Volumenanteil umgewandelt werden. Es wurden Laserpulse von 50 ns und 8 mW oder von 200 ns und 4 mW benötigt, um die Kristallisationsschwelle zu überschreiten. Laserpulse von 4 mW Leistung und 10 $\mu s$ Dauer führten zur vollständigen Kristallisation. Bei einer Laserleistung von 4 mW und kürzeren Pulsdauern wurden Zustände mit niedrigeren kristallinen Volumenanteilen erhalten.

Beispiele 4 bis 10

Sieben Aufzeichnungsträger wurden hergestellt, indem auf ein Glassubstrat nacheinander eine erste AlN-Schicht, eine $GeSb_2Te_4$-Speicherschicht, eine zweite AlN-Schicht und eine Al-Schicht abgeschieden wurden. Die Herstellung der AlN-Schichten und der $GeSb_2Te_4$-Schicht erfolgte wie in den Beispielen 1 bis 3. Für die Abscheidung der Al-Schicht und der AlN-Schichten durch DC-Magnetronsputtern wurde das gleiche Target verwendet. Als Sputtergas bei der Abscheidung der Al-Schicht wurde Argon ($5 \times 10^{-3}$ mbar) verwendet. Die jeweiligen Schichtdicken sind in Tabelle 1 angegeben. Die Dicke der Al-Schicht betrug jeweils 25 nm.

Die in den Beispielen 1 bis 4 erhaltenen Aufzeichnungsträger nach Stand der Technik zeigten bei der Bestrahlung mit Laserlicht der Wellenlänge 780 nm eine Abhängigkeit des optischen Reflexionsvermögens vom Volumenanteil der kristallinen Phase, nach der der höchste Unterschied des Reflexionsvermögens zwischen dem vollständig amorphen Zustand und dem vollständig kristallinen Zustand des Speichermediums auftritt (vgl. Tabelle 1).

Bei den erfindungsgemäßen Aufzeichnungsträgern der Beispiele 5 bis 10 tritt der höchste Unterschied des Reflexionsvermögens zwischen einem teilkristallinen schwächer reflektierenden und dem vollständig kristallinen stärker reflektierenden Zustand auf (vgl. Tabelle 1). Das Reflexionsvermögen wies im Bereich des Minimums eine relativ kleine Abhängigkeit vom Volumenanteil der kristallinen Phase auf. So wurde für den Aufzeichnungsträger des Beispiels 5 gefunden, daß der teilkristalline Zustand bis zu einem kristallinen Volumenanteil von 55 bis 60% ein kleineres Reflexionsvermögen aufweist als der amorphe Zustand. Maximale Unterschiede im optischen Reflexionsvermögen wurden bei den Aufzeichnungsträgern der Beispiele 5 bis 10 für jeweils unterschiedliche kristalline Volumenanteile im teilkristallinen Zustand gefunden. Die Ergebnisse sind in Tabelle 1 zusammengefaßt.

Tabelle 1

| Beispiel Nr. | Schichtdicke der 1. AlN-Schicht (nm) | Schichtdicke der $GeSb_2Te_4$-Schicht (nm) | Schichtdicke der 2. AlN-Schicht (nm) | Kristalliner Volumenanteil beim Reflexionsminimum |
|---|---|---|---|---|
| 1 | 100 | 100 | 100 | 0 % |
| 2 | 80 | 100 | 90 | 0 % |
| 3 | 100 | 60 | 100 | 0 % |
| 4 | 100 | 30 | 10 | 0 % |
| 5 | 70 | 30 | 40 | 25 % |
| 6 | 90 | 30 | 40 | 20 % |
| 7 | 110 | 30 | 40 | 2 % |
| 8 | 70 | 30 | 60 | 45 % |
| 9 | 90 | 30 | 60 | 40 % |
| 10 | 110 | 30 | 60 | 18 % |

Beispiele 11 bis 19

Auf einem Glassubstrat wurden nacheinander eine erste AlN-Schicht, eine GeTe-Speicherschicht, eine zweite AlN-Schicht und eine Al-Schicht abgeschieden. Die Schichten wurden unter denselben Bedingungen erzeugt wie in den Beispielen 4 bis 10; die Abscheiderate für GeTe betrug jedoch 14,8 nm/min. Die jeweiligen Schichtdicken sind in Tabelle 2 angegeben. Die Dicke der Al-Schicht betrug jeweils 100 nm.

6

Tabelle 2

| Beispiel Nr. | Schichtdicke der 1. AlN-Schicht (nm) | Schichtdicke der GeTe-Schicht (nm) | Schichtdicke der 2. AlN-Schicht (nm) | Kristalliner Volumenanteil beim Reflexionsminimum |
|---|---|---|---|---|
| 11 | 50 | 30 | 30 | 12 % |
| 12 | 70 | 30 | 30 | 9 % |
| 13 | 90 | 30 | 30 | 2 % |
| 14 | 50 | 30 | 50 | 32 % |
| 15 | 70 | 30 | 50 | 25 % |
| 16 | 90 | 30 | 50 | 20 % |
| 17 | 50 | 30 | 70 | 51 % |
| 18 | 70 | 30 | 70 | 45 % |
| 19 | 90 | 30 | 70 | 35 % |

Ebenso wie bei den erfindungsgemäßen Aufzeichnungsträgern der Beispiele 5 bis 10 mit einer $GeSb_2Te_4$-Speicherschicht wurde auch bei den erfindungsgemäßen Aufzeichnungsträgern der Beispiele 11 bis 19 gefunden, daß der höchste Unterschied des Reflexionsvermögens zwischen einem teilkristallinen schwächer reflektierenden und dem vollständig kristallinen stärker reflektierenden Zustand auftritt.

Bei den erfindungsgemäßen Aufzeichnungsträgern der Beispiele 5 bis 19 wurde unabhängig von der Zusammensetzung der Speicherschicht folgendes Verhalten gefunden:

Für konstante Dicken der Speicherschicht und der zweiten Al-Schicht wurde gefunden, daß das Reflexionsminimum mit zunehmender Dicke der ersten AlN-Schicht bei teilkristallinen Zuständen mit abnehmendem kristallinen Volumenanteil auftritt. Für konstante Dicken der Speicherschicht und der ersten AlN-Schicht wurde dagegen gefunden, daß das Reflexionsminimum mit zunehmender Dicke der zweiten AlN-Schicht bei teilkristallinen Zuständen mit zunehmendem kristallinen Volumenanteil auftritt.

Die Dicke der Al-Schicht zeigte keinen Einfluß auf die Daten, wenn sie mindestens zu 20 nm gewählt wurde. Die Schichtdicke der Speicherschicht konnte mindestens im Bereich zwischen 20 und 50 nm variiert werden, ohne daß ein Einfluß auf die Daten feststellbar war.

Die unterschiedlichen Volumenanteile der kristallinen Phase wurden durch Bestrahlung mit Laserpulsen (Laserleistung: 1 bis 8 mW; Pulsdauer: 50 ns bis 1$\mu$s) eingestellt.

Zur Bestimmung der in den Tabellen 1 und 2 angegebenen kristallinen Volumenanteile beim Reflexionsminimum wurden die gemessenen Reflexionsvermögen mit den für unterschiedliche Volumenanteile der kristallinen Phase (1-x) berechneten Reflexionsvermögen (zur Rechnung siehe oben) verglichen.

**Patentansprüche**

1. Optischer Aufzeichnungsträger mit mindestens einem Substrat und mindestens einer Speicherschicht vom Phasenwechsel-Typ, gekennzeichnet dadurch, daß er mindestens drei Zustände unterschiedlichen optischen Verhaltens aufweist, die reversibel ineinander umschaltbar sind und die mindestens drei Zustände unterschiedlichen optischen Verhaltens unterschiedliche Volumenanteile von kristalliner und amorpher Phase in der Speicherschicht enthalten, und der Unterschied im Reflexionsvermögen zwischen mindestens einem Paar von Zuständen größer als zwischen dem amorphen und dem kristallinen Zustand ist.

2. Optischer Aufzeichnungsträger nach Anspruch 1, dadurch gekennzeichnet, daß ein Zustand amorph oder kristallin ist.

3. Optischer Aufzeichnungsträger nach Anspruch 1 oder 2, dadurch gekennzeichnet, daß auf wenigstens einer Seite der Speicherschicht eine dielektrische Schicht aufgebracht ist.

4. Optischer Aufzeichnungsträger nach den Ansprüchen 1 bis 3, dadurch gekennzeichnet, daß zwischen dem aus Speicherschicht und eventuellen dielektrischen Schichten bestehenden Schichtsystem und dem Substrat oder auf der dem Substrat abgekehrten Seite dieses Schichtsystems eine Reflexionsschicht aufgebracht ist.

5. Optischer Aufzeichnungsträger nach Anspruch 4, dadurch gekennzeichnet, daß als Reflexionsschicht eine Metallschicht mit einem Reflexionsvermögen >50% verwendet wird.

6. Optischer Aufzeichnungsträger nach den Ansprüchen 1 bis 5, dadurch gekennzeichnet, daß die Speicherschicht mindestens zu 90 Gew.-% aus GeTe oder GeSb$_2$Te$_4$ besteht.

7. Optischer Aufzeichnungsträger nach den Ansprüchen 3 bis 6, dadurch gekennzeichnet, daß die dielektrische Schicht aus einem Carbid, Oxid, Nitrid, Sulfid oder deren Mischungen besteht.

8. Optischer Aufzeichnungsträger nach Anspruch 1 oder 2, dadurch gekennzeichnet, daß auf dem Substrat
   a) eine erste AIN-Schicht mit einer Schichtdicke zwischen 50 und 200 nm,
   b) eine Speicherschicht aus GeTe oder GeSb$_2$Te$_4$ mit einer Schichtdicke zwischen 10 und 50 nm,
   c) eine zweite AIN-Schicht mit einer Schichtdicke zwischen 15 und 100 nm,
   d) eine Al-Schicht mit einer Schichtdicke größer als 20 nm in der genannten Reihenfolge angeordnet sind.

9. Optischer Aufzeichnungsträger nach Anspruch 8, dadurch gekennzeichnet, daß mindestens eine der beiden AIN-Schichten durch eine Schicht aus Si$_3$N$_4$ oder eine Mischung aus Si$_3$N$_4$ mit AIN ersetzt ist.

10. Optischer Aufzeichnungsträger nach den Ansprüchen 1 bis 9, dadurch gekennzeichnet, daß die Schichten durch Sputtern oder Aufdampfen gebildet wurden.